(19) Europäisches Patentamt
European Patent Office
Office européen des brevets

(11) **EP 3 495 513 B1**

(12) **EUROPEAN PATENT SPECIFICATION**

(45) Date of publication and mention
of the grant of the patent:
**07.10.2020 Bulletin 2020/41**

(51) Int Cl.:
*C22B 7/04* (2006.01)     *C22B 9/10* (2006.01)
*C22B 34/12* (2006.01)    *C22C 1/02* (2006.01)
*C22C 1/06* (2006.01)     *C22C 14/00* (2006.01)

(21) Application number: **18816517.9**

(22) Date of filing: **21.05.2018**

(86) International application number:
**PCT/CN2018/087692**

(87) International publication number:
**WO 2018/228142 (20.12.2018 Gazette 2018/51)**

(54) **ALUMINUM THERMAL SELF-PROPAGATION GRADIENT REDUCTION AND SLAG WASHING AND REFINING-BASED METHOD FOR PREPARING TITANIUM ALLOY**

VERFAHREN BASIEREND AUF DER REDUZIERUNG DES THERMISCHEN SELBSTVERMEHRUNGSGRADIENTEN VON ALUMINIUM UND DEM WASCHEN UND RAFFINIEREN VON SCHLACKE ZUR HERSTELLUNG EINER TITANLEGIERUNG

PROCÉDÉ BASÉ SUR LA RÉDUCTION DE GRADIENT D'AUTO-PROPAGATION THERMIQUE D'ALUMINIUM ET LE LAVAGE ET LE RAFFINAGE DE SCORIES POUR PRÉPARER UN ALLIAGE DE TITANE

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **13.06.2017 CN 201710443771**

(43) Date of publication of application:
**12.06.2019 Bulletin 2019/24**

(73) Proprietor: **Northeastern University**
**Shenyang, Liaoning 110819 (CN)**

(72) Inventors:
• **DOU, Zhihe**
  **Shenyang**
  **Liaoning 110819 (CN)**
• **ZHANG, Tingan**
  **Shenyang**
  **Liaoning 110819 (CN)**
• **LIU, Yan**
  **Shenyang**
  **Liaoning 110819 (CN)**
• **LV, Guozhi**
  **Shenyang**
  **Liaoning 110819 (CN)**
• **ZHAO, Qiuyue**
  **Shenyang**
  **Liaoning 110819 (CN)**
• **NIU, Liping**
  **Shenyang**
  **Liaoning 110819 (CN)**
• **FU, Daxue**
  **Shenyang**
  **Liaoning 110819 (CN)**
• **ZHANG, Weiguang**
  **Shenyang**
  **Liaoning 110819 (CN)**

(74) Representative: **Office Kirkpatrick**
**Avenue Wolfers, 32**
**1310 La Hulpe (BE)**

(56) References cited:
**CN-A- 104 131 128    CN-A- 105 132 724**
**CN-A- 107 151 752    CN-B- 104 131 178**
**JP-A- 2009 029 661**

• **NERSISYAN H H ET AL: "Effective two-step method for producing Ti-6Al-4V alloy particles with various morp", POWDER TECHNOLOGY - ELECTROSTATIC PHENOMENA IN PARTICULATE PROCESSES, ELSEVIER, BASEL (CH), vol. 254, 11 January 2014 (2014-01-11), pages 57-62, XP028661962, ISSN: 0032-5910, DOI: 10.1016/J.POWTEC.2014.01.005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- JOERG HAMMERSCHMIDT ET AL: "Elektroschlackeschmelzen von aluminothermisch hergestellten Titan-Aluminiumlegierungen - Eine Alternative zum Kroll-Prozess?", BHM. BERG UND HUETTENMAENNISCHE MONATSHEFTE, SPRINGER, VIENNA, AU, vol. 146, no. 5, 1 January 2001 (2001-01-01), pages 203-209, XP009503649, ISSN: 0005-8912

- NERSISYAN, H.H. et al.: "Effective Two-Step Method for Producing Ti-6A1-4V Alloy Particles with Various Morphologies", Powder Technology, vol. 254, 11 January 2014 (2014-01-11), pages 57-62, XP028661962, ISSN: 0032-5910, DOI: doi:10.1016/j.powtec.2014.01.005

**Description**

**Field of the Invention**

This invention relates to the technical field of titanium-aluminum alloys, in particular to a method for preparing titanium alloys based on aluminothermic self-propagating gradient reduction and slag-washing refining.

**Background of the Invention**

Titanium alloys have excellent properties of being small specific gravity, high specific strength, good high-temperature performance, well resistant to acid and alkali erosion, good biocompatibility and the like. So titanium alloys are widely applied to fields of aerospace, shipbuilding, national defense, military industry, biomedicine and the like, possess a very huge future market. Currently, the annual yield of global processed titanium alloy materials has reached over 40 thousand tons. Among nearly 30 titanium alloy designations, Ti-6A1-4V (TC4) is one of the most widely used titanium alloys as well as a predominant material in titanium alloy applications in countries all over the world, and has an application rate of 50% or above of the total titanium alloy yield, accounting for 95% of all titanium alloy workpieces. Ti-6A1-4V alloys are equiaxial martensite-type two-phase $(\alpha+\beta)$ titanium alloys developed by US Illinois Institute of Technology in 1954, and possess superior strength, toughness, plasticity, formability, weldability, heat resistance, corrosion resistance and biocompatibility. It was firstly applied to the astronautics industry, and with the progress in science and technology, the alloys began to be used for fields of military industry, biomedicine, automobile industry, marine engineering, safety and protection, sports and leisure goods and the like, and have developed into the currently most widely applied titanium alloys with the highest yield. Besides, due to the widespread use of Ti-6A1-4V alloy, it has the most preparation methods, structure property analysis and application studies, and therefore become a typical representative of titanium alloys.

Currently, the industrial production manner of Ti-6A1-4V alloy includes vacuum fusion casting and powder metallurgy method. The vacuum fusion casting method takes titanium sponge as a raw material and comprises the following steps: Adding intermediate alloying elements according to target alloys, performing sufficient mixing, pressing and welding into electrodes, performing melting in an arc melting furnace, an electron beam melting furnace or a plasma melting furnace, performing casting into ingots, and performing heat treatment to obtain finished products. The powder metallurgy method is also called as a blending element (BE) method and is a near net shaping technology for producing complex-shape parts. The powder metallurgy method has the advantages including short technological flow, high utilization rate of materials, fine and uniform in tissues, controllable in ingredients, near in net shaping, and the like. It is an ideal technology for preparing high-performance low-cost titanium alloys. The method comprises the following steps: Mixing titanium powder with element powder in proportion according to alloy ingredients, performing shaping through die pressing or cold isostatic pressing, performing sintering under the vacuum condition, and then performing heat treatment to prepare finished products. However, both methods take titanium sponge or titanium powder as a raw material, while a conventional Kroll method for industrially preparing titanium sponge is a complex technological process with long flow, high energy consumption and high pollution. This is the main reason for causing titanium alloys to be high in price and limited in application range. A molten salt electrolysis method is a current research focus on using titanium oxide to directly prepare titanium alloys. $TiO_2$ is electrolyzed in melt $CaCl_2$ to directly prepare titanium alloys with low oxygen content. However, the method has the disadvantages of immature technological conditions, low current efficiency, low production efficiency, and the like. If titanium-based alloys can be directly prepared from titanium oxides and a certain quantity of oxides of alloying elements by a metallothermic reduction method (such as aluminothermic method), a complex technology process for producing titanium sponge can be avoided, and therefore, the technological cost of titanium alloys can be greatly reduced. The aluminothermic method has the advantages of being rapid in reaction, low energy consumption, and the like. Therefore, direct preparation of titanium-based alloys by using titanium oxides and oxides of titanium alloying elements as raw materials by the aluminothermic method is a promising approach for reducing the cost of titanium alloys. As a main $\alpha$ phase stable element of titanium alloys, aluminum elements mainly play the role of solid solution strengthening. Whenever 1% of Al is added, the tensile strength at room temperature is increased by 50 MPa. The solubility limit of aluminum in titanium is 7.5%. However, the solubility limit is exceeded, ordered phase $Ti_3Al$ $(\alpha_2)$ appears in the structure, which deteriorated the plasticity, toughness and stress corrosion of alloys. For this reason, the aluminum addition amount usually does not exceed 7%, and aluminum content in some titanium alloys is even lower. Therefore, it seems particularly important to control the aluminum content in titanium alloys. However, because $TiO_2$ cannot be thoroughly reduced in the aluminothermic reduction process, titanium and aluminum in the alloys easily produce a Ti-Al intermetallic compound. Therefore, the aluminum content in the alloys is high (no less than 10%), and the aluminum content in the alloys is difficult to control through proportioning in the self-propagating reaction process.

CN 104 131 178 B discloses a method for preparing metal titanium, involving preprocessing rutile or high titanium slag, aluminum powder, slagging agent and potassium chlorate.

In order to overcome the defects of long technological flow, high energy consumption, high cost and the like of a conventional titanium alloy preparation process, and solve the difficult problem that the aluminum content in the preparation process of titanium alloys is difficult to control by aluminothermic method, this invention provides a new method for preparing titanium alloys from rutile or high-titanium slags or titanium dioxide as a raw material based on aluminothermic reduction and slag-washing refining.

## Summary of the Invention

In order to solve the problems such as incomplete reduction of $TiO_2$, high aluminum residue content, high oxygen content, and the like that exist in the conventional external aluminothermic method for preparing ferrotitanium alloys, this invention provides a method for preparing titanium alloys from high titanium slags or rutile or titanium dioxide as a raw material based on aluminothermic self-propagating gradient reduction and slag-washing refining. The method is based on an aluminothermic self-propagating reaction and comprises the following steps of taking the rutile or the high-titanium slags or the titanium dioxide, aluminum powder and the like as raw materials, performing the aluminothermic self-propagating reaction in a gradient charging manner to obtain high-temperature melt, performing gradient reduction melting, controlling the reaction process and temperature and thorough reducing of metal oxides in a batch charging manner or a continuous charging manner, performing heat insulating and melt separation after charging, adding high-alkalinity $CaF_2$-$CaO$-$TiO_2$-$V_2O_5$ based refining slags into the high-temperature melt, adjusting the alkalinity and the melting point of the slags, washing the slags for refining, finally cooling the high-temperature melt to room temperature, and removing upper melting slags to obtain titanium alloys namely titanium-aluminum-vanadium alloys.

The method for preparing titanium alloys based on aluminothermic self-propagating gradient reduction and slag-washing refining comprises the following steps:

Step 1: Material pretreatment

The aluminothermic reduction reaction materials were separately pretreated to obtain pretreated aluminothermic reduction reaction materials, wherein the aluminothermic reduction reaction materials are a titanium-containing material, aluminum powder, $V_2O_5$ powder, CaO and $KClO_3$. The titanium-containing material is one of or a mixture of rutile, high-titanium slags contain no less than 92% in mass percentage of $TiO_2$ or titanium dioxide; weighing the pre-treated aluminothermic reduction reaction materials in proportion, wherein the mass ratio of titanium-containing material to the aluminum powder to the $V_2O_5$ powder to the CaO to the $KClO_3$ is 1.0: (0.60-0.24): (0.042-0.048): (0.12-0.26): (0.22-0.30). The aluminothermic reduction reaction material has the characters as follow: the particle size of rutile and high-titanium slags is no larger than 3 mm, while the particle size of titanium dioxide is no larger than 0.02 mm. Meanwhile, the particle size of aluminum powder, $V_2O_5$ powder, CaO and $KClO_3$ is no larger than 2 mm, 0.2 mm, 0.2 mm and 2 mm, respectively.

Step 2: Aluminothermic self-propagating reaction

Perform gradient aluminothermic reduction in one of the two following charging manners:

Charging manner I:

Mix the weighed aluminothermic self-propagating reaction materials other than aluminum powder to obtain a material mixture, and divide the material mixture into several parts; then weigh and take aluminum powder according to the adding sequence of each part of the material mixture into a reaction furnace. Moreover, gradually reducing the aluminium powder addition amount from 1.15-1.35 to 0.85-0.65 times of the stoichiometric ratio; the actual addition mass of the aluminum powder can be obtained from the equation list as follow:

$$m_a = m_t \times (95 - 100)\%$$

Where $m_a$ and $m_t$ represent the total actual and total theoretical addition mass of the aluminum powder, respectively. The first-batch added into the reaction furnace accounts for 10-30% of the mass of the total material mixture, and magnesium powder needs to be added as an ignition substance for the ignition of these first material mixture added into the reaction furnace to innduce a self-propagating reaction, so a first-batch high-temperature melt enough for initiating subsequent reactions is obtained. Finally, other parts of the material mixture was added into the reaction furnace until all materials fully reacted to obtain high-temperature melt.

Charging manner II:

Mix the aluminothermic self-propagating reaction materials other than aluminum powder to obtain a material mixture, and then charge the material mixture into a continuous material mixer at a constant flow rate.
Besides, aluminum powder was added into the continuous material mixer at a gradient-reduced flow rate so that the aluminum proportioning amount of continuously-added material mixture is gradually reduced from 1.15-1.35 to 0.85-0.65 times of the stoichiometric ratio, wherein the number of gradient changes of the aluminum proportioning amount conforms the following relational formula:

$$m = (b - c) \div a$$

In this formula, m is the number of gradient changes of the aluminum proportioning amount, b is the maximum aluminum proportioning amount, c is the minimum aluminum proportioning amount, a represents the factor of gradient changes of the aluminum proportioning amount, and a is a number between 0 and 0.04.

According to the chemical reaction equation, the actual total addition mass of aluminum powder ($m_a$) is obtained from the relationship with the total theoretical addition mass ($m_t$) through the following equation: $m_a = m_t \times (95 - 100)$ %.

A material mixture was obtained through uniformly mixing the aluminothermic self-propagating reaction materials in the continuous material mixer, and continuously adding the material mixture into the reaction furnace for aluminothermic reduction reaction until all materials fully react so as to obtain high-temperature melt.

Step 3: Melt separation under electromagnetic field

Heat the high-temperature melt through electromagnetic induction to perform heat insulation and melt separation, and realize slag-metal separation to obtain a layered melt with aluminum oxide based melt slags as an upper layer and alloy melt as a lower layer, wherein the temperature is controlled as 1700-1800 DEG C and the heat insulating time as 5-25 min in the melt separation process.

Step 4: Slag washing refining

(1) A large amount of slags account for 85-95% of total volume of upper-layer aluminum oxide based melt slags was removed, the remaining aluminum oxide based melt slags and the lower-layer alloy melt was eccentrically and mechanically stirred at a stirring speed of 50-150 rpm, and the temperature was controlled at the range of 1700-1800 DEG C;

(2) After the melt is uniformly mixed, continue to perform stirring. Meanwhile, $CaF_2$-$CaO$-$TiO_2$-$V_2O_5$ based refining slags were sprayed and blew into the uniformly-mixed melt with high-purity inert gas as carrier gas, wherein the mass ratio of the aluminothermic self-propagating reaction materials to $CaF_2$-$CaO$-$TiO_2$-$V_2O_5$ based refining slags is 1.0: (0.02-0.08).

The $CaF_2$-$CaO$-$TiO_2$-$V_2O_5$ based refining slags contain the following chemical ingredients in mass percentage of 5%-10% of $CaF_2$, 40%-60% of $CaO$, 0-2% of $Na_2O$, 30%-40% of $TiO_2$, 5%-15% of $V_2O_5$ and the balance of inevitable impurities, wherein the particle size of each component of $CaO$, $CaF_2$, $Na_2O$, $TiO_2$ and $V_2O_5$ powder in $CaF_2$-$CaO$-$TiO_2$-$V_2O_5$ based refining slags is no larger than 0.2 mm;

(3) After the process of spraying and blowing the $CaF_2$-$CaO$-$TiO_2$-$V_2O_5$ based refining slags was completed, perform heat insulation at 1700-1800 DEG C and continue eccentric and mechanical stirring for 10-30 min, so as to obtain titanium alloy melt.

Step 5: Cooling

Cooling the titanium alloy melt to room temperature, and then remove upper melting slags to obtain titanium alloys.

The prepared titanium alloys contain the following chemical ingredients in mass percentage of 5.5%-6.5% of Al, 3.5%-4.5% of V, 0.2%-1.0% of Si, 0.2%-1.0% of Fe, O being smaller than or equal to 0.9% and the rest balance of Ti.

In the step 1, the method for pretreating the aluminothermic reduction reaction materials comprises the following steps of

(1) Roasting the titanium-containing material, $V_2O_5$ powder and CaO at temperature being no less than 120 DEG C for 12-36 h, respectively;

(2) Drying $KClO_3$ at 150-300 DEG C for 12-48 h.

In the step 2, the number of several parts is n, wherein n is no less than 4.

In the step 3, electromagnetic induction equipment is a medium-frequency induction furnace, and the frequency of the electromagnetic field is no less than 1000 Hz.

In the step 4, eccentrical and mechanical stirring is performed, wherein the eccentrical and mechanical stirring rate is 0.2-0.4.

In the step 4, spraying and blowing are preferably performed at the bottom of the medium-frequency induction furnace.

In the step 4, high-purity inert gas is high-purity argon, wherein the purity is no less than 99.95%.

In the step 4(2), the $CaF_2$-$CaO$-$TiO_2$-$V_2O_5$ based refining slags are pretreated before being used, wherein the roasting temperature is 150-450 DEG C, and the roasting time is 10-48 h.

Compared with a vacuum consumable arc melting furnace or the blending elements method for preparing titanium alloys, the method for preparing titanium alloys based on aluminothermic self-propagating gradient reduction and slag-washing refining disclosed by the invention has the following significant progresses and advantages:

1. This invention provides a new idea for preparing titanium alloys from rutile or high-titanium slags or titanium dioxide, aluminum powder and $V_2O_5$ pow-

der as raw materials based on aluminothermic reduction and slag washing refining, which has the advantages of being short flows, low energy consumption, easy to operate, easy in controlling of Al and V content in the alloys, and the like.

2. Firstly, materials with aluminum proportioning factors higher than the stoichiometric ratio are used for the aluminothermic self-propagating reaction to obtain high-temperature melt with higher temperature, which is beneficial for initiating the reaction of subsequent materials with low aluminum proportioning factors.

3. The high aluminum proportioning factors guarantee strong reducing atmosphere in the obtained melt and guarantee complete reduction of metal oxides.

4. The aluminum proportioning factors of materials are gradually reduced from a value greater than the stoichiometric ratio to a value smaller than the stoichiometric ratio, so that an excessive reducing agent combined with titanium in the melt is gradually released and gradually reacts with oxides of titanium and vanadium in the subsequently added materials with low aluminum proportioning factors, and the effective control of aluminum content in final products is realized.

5. The greater the charging batch is or the smaller the continuous charging gradient is, the smaller the gradient change of aluminum proportioning factors is, the more obvious the gradient reducing effect is, and the higher the yield of alloy is; and besides, the temperature in the reaction process can be controlled by adjustment of the charging speed.

6. The viscosity of slags is reduced and the fluidity of slags is increased by adjusting the alkalinity and the melting point of the slags with added refining slags in a slag washing refining process, slag-metal interfacial chemical reaction and the thorough slag-metal separation are realized, and impurities such as alumina, are effectively removed; and besides, the reaction heat of a system is fully utilized in the heat insulation, melting and slag washing refining process, so the energy consumption is reduced.

7. The slag washing refining is performed through electromagnetic induction heating, with an eccentric and mechanical stirring is additionally performed, the upper layer is aluminum oxide based melting slags, the lower layer is metal melt, and the slag-metal separation process is strengthened.

**Detailed Description of the Invention**

The invention is further detailed below in combination with embodiments.

In the following embodiments:
Titanium-containing materials: Rutile contains the following ingredients in mass percentage of $TiO_2$ which is no less than 92% and the rest balance of impurities, with particle size being no larger than 3 mm; High-titanium slags contain the following ingredients in mass percentage of $TiO_2$ which is no less than 92% and the rest balance of impurities, with particle size being no larger than 3 mm; Titanium dioxide contains the following ingredients in mass percentage of $TiO_2$ which is no less than 99.5% and the rest balance of impurities, with particle size being no larger than 0.02 mm.

The particle size of the $V_2O_5$ powder is no larger than 0.2 mm.

The particle size of the aluminum powder is no larger than 2 mm.

The particle size of a slag forming constituent is no larger than 0.2 mm.

The purity of high purity argon is greater than 99.95%.

In the following embodiments, in the melt separation and the slag washing refining process, a medium frequency induction furnace is adopted as equipment, and the frequency of electromagnetic field in the medium-frequency induction furnace is not lower than 1000 Hz.

Embodiment 1:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags, $V_2O_5$ powder, and performing separate roasting at 600 DEG C for 32 h; and roasting CaO at 200 DEG C for 16 h; drying $KClO_3$ at 160 DEG C for 18 h to obtain pretreated aluminothermic reduction reaction materials.

The pretreated aluminothermic reduction reaction materials were weighed in proportion, wherein the mass ratio of high-titanium slags to aluminum powder to $V_2O_5$ powder to CaO to $KClO_3$ is 1.0: 0.26: 0.045: 0.16: 0.28.

Among the aluminothermic reduction reaction materials, the particle size of the high-titanium slags is no larger than 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the weighed aluminothermic self-propagating reaction materials other than the aluminum powder to obtain a material mixture, and dividing the material mixture into 5 parts; proportioning aluminum according to the adding sequence of each part of the material mixture into a reaction furnace, wherein the aluminum proportioning amount is sequentially 1.20, 1.05, 1.0, 0.90 and 0.85 times of the stoichiometric ratio; obtaining that the total mass of the added aluminum powder is the total theoretical addition mass (mt), the actual total addition mass ($m_a$) of the aluminum powder is obtained from the chemical reaction equation list as follows:

$$m_a = m_t \times 95\%$$

Wherein the mass of the first batch material mixture added into the reaction furnace accounts for 20% of the total material mixture, and magnesium powder needs to be added as an ignition substance for these added into the reaction furnace to ignite the material mixture to initiate a self-propagating reaction, then a first-batch high-temperature melt enough for initiating subsequent reactions is obtained.

After that, other parts of the material mixture were sequentially added into the reaction furnace according to the sequentially reduced sequence of the stoichiometric ratio of aluminum proportioning amount until all materials fully reacted to obtain high-temperature melt.

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1800 DEG C and the heat insulating time as 15 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.3 and at the stirring speed of 50 rpm, and controlling the temperature at 1800 DEG C.
(2) After the melt is uniformly mixed, continue to perform stirring, and spraying and blowing $CaF_2$-CaO-$TiO_2$-$V_2O_5$ based refining slags into the uniformly-mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.02.
The $CaF_2$-CaO-$TiO_2$-$V_2O_5$ based refining slags contain the following chemical ingredients in mass percentage of 5% of $CaF_2$, 60% of CaO, 0% of $Na_2O$, 30% of $TiO_2$, and 5% of $V_2O_5$, wherein the particle size of each component of CaO, $CaF_2$, $Na_2O$, $TiO_2$

and $V_2O_5$ powder in the $CaF_2$-CaO-$TiO_2$-$V_2O_5$ based refining slags is no larger than 0.2 mm. The $CaF_2$-CaO-$TiO_2$-$V_2O_5$ based refining slags are pre-treated before being used, and roasting is performed at a roasting temperature of 150 DEG C for 10 h.
(3) After spraying and blowing the $CaF_2$-CaO-$TiO_2$-$V_2O_5$ based refining slags, performing heat insulation at 1800 DEG C, and continue eccentric and mechanical stirring for 10 min to obtain titanium alloy melt.

Step 5: Cooling

Cooling the titanium alloy melt to room temperature, and removing upper melting slags to obtain titanium alloys.
The prepared titanium alloys contain the following chemical ingredients in mass percentage of 6.2% of Al, 3.50% of V, 0.2% of Si, 0.2% of Fe, O being no more than 0.32% and the balance of Ti.

Embodiment 2:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including titanium dioxide contain 99.5% (wt.) of $TiO_2$, $V_2O_5$ powder, and performing separate roasting at 650 DEG C for 36 h; and roasting CaO at 200 DEG C for 8 h; drying $KClO_3$ at 160 DEG C for 18 h to obtain pretreated aluminothermic reduction reaction materials.
The pretreated aluminothermic reduction reaction materials were weighed in proportion, wherein the mass ratio of titanium dioxide to aluminum powder to $V_2O_5$ powder to CaO to $KClO_3$ is 1.0: 0.26: 0.045: 0.16: 0.28.
Among the aluminothermic reduction reaction materials, the particle size of the titanium dioxide is no larger than 0.02 mm, the particle size of the aluminum powder is no larger than 2 mm, the particle size of the $V_2O_5$ powder is no larger than 0.2 mm, the particle size of CaO is no larger than 0.2 mm, and the particle size of $KClO_3$ is no larger than 2 mm.

Step 2: Aluminothermic self-propagating reaction

Mix the weighed aluminothermic self-propagating reaction materials other than the aluminum powder to obtain a material mixture, and dividing the material mixture into 6 parts; proportioning aluminum according to the adding sequence of each part of the material mixture into a reaction furnace, wherein the aluminum proportioning amount is sequentially 1.20, 1.1, 0.95, 0.90, 0.85 and 0.80 times of the stoichiometric ratio; obtaining that the total mass of the added aluminum powder is the total theoretical addition mass (mt), the actual total addition mass ($m_a$) of the aluminum powder is obtained from the chemical reaction equation list as follows:

$$m_a = m_t \times 98\%$$

Wherein the first batch material mixture added into the reaction furnace accounts for 28.6% of the total material mixture, and magnesium powder needs to be added as an ignition substance for the first material mixture added into the reaction furnace to ignite the material mixture to initiate a self-propagating reaction, then a first batch high-temperature melt enough for initiating subsequent reactions is obtained.

After that, other parts of the material mixture were sequentially added into the reaction furnace according to the sequentially reduced sequence of the stoichiometric ratio of aluminum proportioning amount until all materials fully reacted to obtain high-temperature melt.

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1750 DEG C and the heat insulating time as 20min in the melt separation process.

Step 4: Slag washing refining

(1) Remove 95% of upper-layer aluminum oxide based melt slags, the remaining aluminum oxide based melt slags and the lower layer alloy melt were eccentrically and mechanically stirred at eccentric distance of 0.2 and at the stirring speed of 100 rpm, and controlling the temperature at 1750 DEG C.
(2) After the melt is uniformly mixed, continue to perform stirring, and spraying and blowing $CaF_2$-CaO-$TiO_2$-$V_2O_5$ based refining slags into the uniformly-mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.04.
The $CaF_2$-CaO-$TiO_2$-$V_2O_5$ based refining slags contain the following chemical ingredients in mass percentage of 10% of $CaF_2$, 50% of CaO, 0% of $Na_2O$, 30% of $TiO_2$, and 10% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 150 DEG C for 20h.
(3) After spraying and blowing the $CaF_2$-CaO-$TiO_2$-$V_2O_5$ based refining slags, performing heat insulation at 1750 DEG C, and continue eccentric and mechanical stirring for 30 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 6.0% of Al, 3.80% of V, 0.3% of Si, 0.6% of Fe, 0.24% of O and the balance of Ti.

Embodiment 3:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including rutile containing 92% (wt.) of $TiO_2$, $V_2O_5$ powder, and performing separate roasting at 600 DEG C for 24 h; and roasting CaO at 300 DEG C for 12 h; drying $KClO_3$ at 200 DEG C for 18 h to obtain pretreated aluminothermic reduction reaction materials.

The pretreated aluminothermic reduction reaction materials were weighed in proportion, wherein the mass ratio of rutile to aluminum powder to $V_2O_5$ powder to CaO to $KClO_3$ is 1.0: 0.26: 0.045: 0.16: 0.28.

Among the aluminothermic reduction reaction materials, the particle size of the rutile is no larger than 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the weighed aluminothermic self-propagating reaction materials other than the aluminum powder to obtain a material mixture, and dividing the material mixture into 8 parts; proportioning aluminum according to the adding sequence of each part of the material mixture into a reaction furnace, wherein the aluminum proportioning amount is sequentially 1.20, 1.1, 1.0, 0.95, 0.925, 0.90, 0.875 and 0.85 times of the stoichiometric ratio; obtaining that the total mass of the added aluminum powder is the total theoretical addition mass (mt), the actual total addition mass ($m_a$) of the aluminum powder is obtained from the chemical reaction equation list as follows:

$$m_a = m_t \times 99\%;$$

Wherein the mass of the first batch material mixture added into the reaction furnace accounts for 22.2% of the total material mixture, and magnesium powder needs to be added as an ignition substance for the first material mixture added into the reaction furnace to ignite the material mixture to initiate a self-propagating reaction, then a first batch high-temperature melt enough for initiating subsequent reactions is obtained.

After that, other parts of the material mixture were sequentially added into the reaction furnace according to the sequentially reduced sequence of the stoichiometric ratio of aluminum proportioning amount until all materials fully reacted to obtain high-temperature melt.

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1700 DEG C and the heat insulating time as 25 min in the melt separation process.

Step 4: Slag washing refining

(1) Remove 95% of upper layer aluminum oxide based melt slags, the remaining aluminum oxide based melt slags and the lower layer alloy melt were eccentrically and mechanically stirred at eccentric distance of 0.2 and at the stirring speed of 100 rpm, and controlling the temperature at 1700 DEG C.

(2) After the melt is uniformly mixed, continue to perform stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.06.

The $CaF_2$-CaO-$TiO_2$-$V_2O_5$ based refining slags contain the following chemical ingredients in mass percentage of 5% of $CaF_2$, 40% of CaO, 0% of $Na_2O$,

40% of $TiO_2$, and 15% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 180 DEG C for 20 h.

(3) After spraying and blowing the $CaF_2$-CaO-$TiO_2$-$V_2O_5$ based refining slags, performing heat insulation at 1700 DEG C, and continue eccentric and mechanical stirring for 30min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.8% of Al, 4.40% of V, 0.4% of Si, 0.8% of Fe, 0.2% of O and the balance of Ti.

Embodiment 4:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags containing 93% by mass of $TiO_2$, $V_2O_5$ powder, and performing separate roasting at 700 DEG C for 12 h; and roasting CaO at 300 DEG C for 36 h; drying $KClO_3$ at 250 DEG C for 8 h to obtain pretreated aluminothermic reduction reaction materials.

The pretreated aluminothermic reduction reaction materials were weighed in proportion, wherein the mass ratio of high-titanium slags to aluminum powder to $V_2O_5$ powder to CaO to $KClO_3$ is 1.0: 0.26: 0.045: 0.16: 0.28.

Among the aluminothermic reduction reaction materials, the particle size of the high-titanium slags is no larger than 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, adding the aluminum powder into the continuous material mixer at a gradient-reduced flow rate so that the aluminum proportioning amount of continuously added material mixture is gradually reduced from 1.28 to 0.7 times of the stoichiometric ratio, wherein the number of gradient changes of the aluminum proportioning amount conforms the following relational formula:

$$m = (b - c) \div a$$

In the formula, m is the number of gradient changes of the aluminum proportioning amount, b is the maximum aluminum proportioning amount, c is the minimum aluminum proportioning amount, a represents the factor of gradient changes of the aluminum proportioning amount, where a is equal to 0.01. Through calculation, m is 58, and the time interval of aluminum powder flow gradient changes is the total reaction time divided by m.

Obtaining that the total mass of the added aluminum powder is the total theoretical addition mass ($m_t$), the actual total addition mass ($m_a$) of the aluminum powder is obtained from the chemical reaction equation list as follows:

$$m_a = m_t \times 98\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1800 DEG C and the heat insulating time as 15 min in the melt separation process.

Step 4: Slag washing refining

(1) Remove 85% of upper-layer aluminum oxide based melt slags, the remaining aluminum oxide based melt slags and the lower layer alloy melt were eccentrically and mechanically stirred at eccentric distance of 0.4 and at the stirring speed of 50 rpm, and controlling the temperature at 1800 DEG C;
(2) After the melt is uniformly mixed, continue to perform stirring, and spraying and blowing $CaF_2$-CaO-$TiO_2$-$V_2O_5$ based refining slags into the uniformly-mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.05.

The $CaF_2$-CaO-$TiO_2$-$V_2O_5$ based refining slags contain the following chemical ingredients in mass percentage of 10% of $CaF_2$, 50% of CaO, 0% of $Na_2O$, 35% of $TiO_2$, and 5% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 150 DEG C for 10 h.

(3) After spraying and blowing the $CaF_2$-CaO-$TiO_2$-$V_2O_5$ based refining slags, performing heat insulation at 1800 DEG C, and continue eccentric and mechanical stirring for 20 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 6.1% of Al, 3.60% of V, 0.6% of Si, 0.7% of Fe, 0.31% of O and the balance of Ti.

Embodiment 5:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags containing 92.5% by mass of $TiO_2$, titanium dioxide containing 99.6% by mass of $TiO_2$, $V_2O_5$ powder, and performing separate roasting at 650 DEG C for 20 h; and roasting CaO at 200 DEG C for 12 h; drying $KClO_3$ at 150 DEG C for 18 h, to obtain pretreated aluminothermic reduction reaction materials, wherein the mixing mass ratio of the high-titanium slags to the titanium dioxide is 1 to 1.

The pretreated aluminothermic reduction reaction materials were weighed in proportion, wherein the mass ratio of high-titanium slags and titanium dioxide to aluminum powder to $V_2O_5$ powder to CaO to $KClO_3$ is 1.0: 0.26: 0.045: 0.16: 0.28.

Among the aluminothermic reduction reaction materials, the particle size of the high-titanium slags is no larger than 3 mm, the particle size of the titanium dioxide is no larger than 0.02 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, adding the aluminum powder into the continuous material mixer at a gradient-reduced flow rate so that the aluminum proportioning amount of continuously added material mixture is gradually reduced from 1.20 times of the stoichiometric ratio to 0.75 times of the stoichiometric ratio, wherein the number of gradient changes of the aluminum proportioning amount conforms the following relational formula:

$$m= (b \text{ - } c) \div a$$

In the formula, m is the number of gradient changes of the aluminum proportioning amount, b is the maximum aluminum proportioning amount, c is the minimum aluminum proportioning amount, a represents the factor of gradient changes of the aluminum proportioning amount, where a is equal to 0.003, and through calculation, m is 150.

Obtaining that the total mass of the added aluminum powder is the total theoretical addition mass ($m_t$), the actual total addition mass ($m_a$) of the aluminum powder is obtained from the chemical reaction equation list as follows:

$$m_a= m_t \times 96\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1700 DEG C and the heat insulating time as 15 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.4 and at the stirring speed of 150 rpm, and controlling the temperature at 1700 DEG C.
(2) After the melt is uniformly mixed, continue to perform stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.05.
The $CaF_2$-CaO-$TiO_2$-$V_2O_5$ based refining slags contain the following chemical ingredients in mass percentage of 5% of $CaF_2$, 50% of CaO, 0% of $Na_2O$, 30% of $TiO_2$, and 10% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 450 DEG C for 12 h.
(3) After spraying and blowing the $CaF_2$-CaO-$TiO_2$-$V_2O_5$ based refining slags, performing heat insulation at 1700 DEG C, and continue eccentric and mechanical stirring for 10 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.8% of Al, 4.10% of V, 0.3% of Si, 0.6% of Fe, 0.22% of O and the balance of Ti.

Embodiment 6:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags containing 93% by mass of $TiO_2$, titanium dioxide containing 99.5% by mass of $TiO_2$, rutile containing 94% of $TiO_2$, $V_2O_5$ powder, and performing separate roasting at 650 DEG C for 36 h; and roasting CaO at 300 DEG C for 16 h; drying $KClO_3$ at 180 DEG C for 24 h, to obtain pretreated aluminothermic reduction reaction materials, wherein the mixing mass ratio of high-titanium slags to titanium dioxide to rutile is 1 to 1 to 1.

The pretreated aluminothermic reduction reaction materials were weighed in proportion, wherein the mass ratio of high-titanium slags and titanium dioxide and rutile to aluminum powder to $V_2O_5$ powder to CaO to $KClO_3$ is 1.0: 0.26: 0.045: 0.16: 0.28.

Among the aluminothermic reduction reaction materials, the particle size of the high-titanium slags is no larger than 3 mm, the particle size of the rutile is no larger than 3 mm, the particle size of the titanium dioxide is no larger than 0.02 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, aluminum powder were added into the continuous material mixer at a gradient-reduced flow rate so that the aluminum proportioning amount of continuously added material mixture is gradually reduced from 1.2 times of the stoichiometric ratio to 0.75 times of the stoichiometric ratio, wherein the number of gradient changes of the aluminum proportioning amount conforms the following relational formula:

$$m = (b - c) \div a$$

In the formula, m is the number of gradient changes of the aluminum proportioning amount, b is the maximum aluminum proportioning amount, c is the minimum aluminum proportioning amount, a represents the factor of gradient changes of the aluminum proportioning amount, where a is equal to 0.001, and through calculation, m is 450.

Obtaining that the total mass of the added aluminum powder is the total theoretical addition mass ($m_t$), the actual total addition mass ($m_a$) of the aluminum powder is obtained from the chemical reaction equation list as follows:

$$m_a = m_t \times 95\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1750 DEG C and the heat insulating time as 20 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.4 and at the stirring speed of 50 rpm, and controlling the temperature at 1750 DEG C.
(2) After the melt is uniformly mixed, continue to perform stirring, and spraying and blowing $CaF_2$-CaO-$TiO_2$-$V_2O_5$ based refining slags into the uniformly-mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.06.
The $CaF_2$-CaO-$TiO_2$-$V_2O_5$ based refining slags contain the following chemical ingredients in mass percentage of 10% of $CaF_2$, 40% of CaO, 0% of $Na_2O$, 35% of $TiO_2$, and 15% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 200 DEG C for 12 h.
(3) After spraying and blowing the $CaF_2$-CaO-$TiO_2$-$V_2O_5$ based refining slags, performing heat insulation at 1750 DEG C, and continue eccentric and mechanical stirring for 30 min to obtain titanium alloy melt;

Step 5: Cooling

Cooling the titanium alloy melt to room temperature, and removing upper melting slags to obtain titanium alloys.

The prepared titanium alloys contain the following chemical ingredients in mass percentage of 5.6% of Al, 4.40% of V, 0.6% of Si, 0.8% of Fe, 0.18% of O and the balance of Ti.

Embodiment 7:

The method for preparing titanium alloys based on aluminothermic self-propagating gradient reduction and slag-washing refining specially comprises the following steps:

Step 1: Material pretreatment

The aluminothermic reduction reaction materials were separately pretreated, including rutile containing 92% by mass of $TiO_2$, $V_2O_5$ powder, and performing separate roasting at 600 DEG C for 24 h; and roasting CaO at 200 DEG C for 16 h; drying $KClO_3$ at 180 DEG C for 20 h, to obtain pretreated aluminothermic reduction reaction materials.

The pretreated aluminothermic reduction reaction materials were weighed in proportion, wherein the mass ratio of rutile to aluminum powder to $V_2O_5$ powder to CaO to $KClO_3$ is 1.0: 0.26: 0.045: 0.16: 0.28.

In the aluminothermic reduction reaction materials, the particle size of the rutile is smaller than or equal to 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the weighed aluminothermic self-propagating reaction materials other than the aluminum powder to obtain a material mixture, and dividing the material mixture into 5 parts, proportioning aluminum according to the adding sequence of each part of the material mixture into a reaction furnace, wherein the aluminum proportioning amount is sequentially 1.20, 1.05, 1.0, 0.90 and 0.85 times of the stoichiometric ratio; obtaining that the total mass of the added aluminum powder is the total theoretical addition mass (mt), the actual total addition mass ($m_a$) of the aluminum powder is obtained from the chemical reaction equation list as follows:

$$m_a = m_t \times 98\%$$

Wherein the mass of the first batch material mixture added into the reaction furnace accounts for 20% of the total material mixture, and magnesium powder needs to be added as an ignition substance for the first material mixture added into the reaction furnace to ignite the material mixture to initiate a self-propagating reaction, then a first-batch high-temperature melt enough for initiating subsequent reactions is obtained;

After that, other parts of the material mixture were sequentially added into the reaction furnace according to the sequentially reduced sequence of the stoichiometric ratio of aluminum proportioning amount until all materials fully reacted to obtain high-temperature melt;

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1700 DEG C and the heat insulating time as 15 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.3 and at the stirring speed of 100 rpm, and controlling the temperature at 1700 DEG C.
(2) After the melt is uniformly mixed, continue to perform stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.04.
The $CaF_2$-CaO-$TiO_2$-$V_2O_5$ based refining slags contain the following chemical ingredients in mass percentage of 5% of $CaF_2$, 50% of CaO, 0% of $Na_2O$, 40% of $TiO_2$, and 5% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 150 DEG C for 10h.
(3) After spraying and blowing the $CaF_2$-CaO-$TiO_2$-$V_2O_5$ based refining slags, performing heat insulation at 1700 DEG C, and continue eccentric and mechanical stirring for 10 min to obtain titanium alloy melt;

Step 5: Cooling

Cooling the titanium alloy melt to room temperature, and removing upper melting slags to obtain titanium alloys.

The prepared titanium alloys contain the following chemical ingredients in mass percentage of 6.3% of Al, 3.70% of V, 0.4% of Si, 0.6% of Fe, 0.35% of O and the balance of Ti.

Embodiment 8:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including titanium dioxide containing 99.7% by mass of $TiO_2$, rutile containing 93% by mass of $TiO_2$, $V_2O_5$ powder, and performing separate roasting at 700 DEG C for 16 h; and roasting CaO at 250 DEG C for 16 h; drying $KClO_3$ at 180 DEG C for 36 h to obtain pretreated aluminothermic reduction reaction materials, wherein the mixing mass ratio of the titanium dioxide to the rutile is 1 to 1.

The pretreated aluminothermic reduction reaction materials were weighed in proportion, wherein the mass ratio of titanium dioxide and rutile to aluminum powder to $V_2O_5$ powder to CaO to $KClO_3$ is 1.0: 0.26: 0.045: 0.16: 0.28.

Among the aluminothermic reduction reaction materials, the particle size of the titanium dioxide is no larger than 0.02 mm, the particle size of the rutile is no larger than 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm;

Step 2: Aluminothermic self-propagating reaction

Mix the weighed aluminothermic self-propagating reaction materials other than the aluminum powder to obtain a material mixture, and dividing the material mixture into 6 parts, proportioning aluminum according to the adding sequence of each part of the material mixture into a reaction furnace, wherein the aluminum proportioning amount is sequentially 1.20, 1.1, 0.95, 0.90, 0.85 and 0.80 times of the stoichiometric ratio; obtaining that the total mass of the added aluminum powder is the total theoretical addition mass ($m_t$), the actual total addition mass ($m_a$) of the aluminum powder is obtained from the chemical reaction equation list as follows:

$$m_a = m_t \times 98\%$$

Wherein the mass of the first batch material mixture added into the reaction furnace accounts for 28.6% of the total material mixture, and magnesium powder needs to be added as an ignition substance for the first material mixture added into the reaction furnace to ignite the material mixture to initiate a self-propagating reaction, then a first-batch high-temperature melt enough for initiating subsequent reactions is obtained.

After that, other parts of the material mixture were sequentially added into the reaction furnace according to the sequentially reduced sequence of the stoichiometric ratio of aluminum proportioning amount until all materials fully reacted to obtain high-temperature melt.

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1800 DEG C and the heat insulating time as 15 min in the melt separation process.

Step 4: Slag washing refining

(1) Remove 95% of upper-layer aluminum oxide based melt slags, the remaining aluminum oxide based melt slags and the lower layer alloy melt were eccentrically and mechanically stirred at eccentric distance of 0.4 and at the stirring speed of 50 rpm, and controlling the temperature at 1800 DEG C.
(2) After the melt is uniformly mixed, continuing performing stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.06.
The $CaF_2$-CaO-$TiO_2$-$V_2O_5$ based refining slags contain the following chemical ingredients in mass percentage of 10% of $CaF_2$, 40% of CaO, 0% of $Na_2O$, 40% of $TiO_2$, and 10% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 150 DEG C for 48 h.
(3) After spraying and blowing the $CaF_2$-CaO-

TiO$_2$-V$_2$O$_5$ based refining slags, performing heat insulation at 1800 DEG C, and continue eccentric and mechanical stirring for 20 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.7% of Al, 4.20% of V, 0.7% of Si, 0.9% of Fe, 0.18% of O and the balance of Ti.

Embodiment 9:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including rutile containing 92% by mass of TiO$_2$, V$_2$O$_5$ powder, and performing separate roasting at 650 DEG C for 16 h; and roasting CaO at 200 DEG C for 16 h; drying KClO$_3$ at 180 DEG C for 24h, to obtain pretreated aluminothermic reduction reaction materials.

The pretreated aluminothermic reduction reaction materials were weighed in proportion, wherein the mass ratio of rutile to aluminum powder to V$_2$O$_5$ powder to CaO to KClO$_3$ is 1.0: 0.26: 0.045: 0.16: 0.28.

Among the aluminothermic reduction reaction materials, the particle size of the rutile is no larger than 3 mm, the particle size of the aluminum powder is no larger than 2 mm, the particle size of the V$_2$O$_5$ powder is no larger than 0.2mm, the particle size of CaO is no larger than 0.2 mm, and the particle size of KClO$_3$ is no larger than 2 mm.

Step 2: Aluminothermic self-propagating reaction

Mix the weighed aluminothermic self-propagating reaction materials other than the aluminum powder to obtain a material mixture, and dividing the material mixture into 8 parts, proportioning aluminum according to the adding sequence of each part of the material mixture into a reaction furnace, wherein the aluminum proportioning amount is sequentially 1.20, 1.1, 1.0, 0.95, 0.925, 0.90, 0.875 and 0.85 times of the stoichiometric ratio; obtaining that the total mass of the added aluminum powder is the total theoretical addition mass (mt), the actual total addition mass (m$_a$) of the aluminum powder is obtained from the chemical reaction equation list as follows:

$$m_a = m_t \times 98\%$$

Wherein the mass of the first-batch material mixture added into the reaction furnace accounts for 22.2% of the total material mixture, and magnesium powder needs to be added as an ignition substance for the first material mixture added into the reaction furnace to ignite the material mixture to initiate a self-propagating reaction, then a first-batch high-temperature melt enough for initiating subsequent reactions is obtained.

After that, other parts of the material mixture were sequentially added into the reaction furnace according to the sequentially reduced sequence of the stoichiometric ratio of aluminum proportioning amount until all materials fully reacted to obtain high-temperature melt.

Step 3: Melt separation under electromagnetic field

Heat the high-temperature melt through electromagnetic induction, perform heat insulation and melt separation, realize slag-metal separation to obtain a layered melt with aluminum oxide based melt slags as an upper layer and alloy melt as a lower layer, wherein the temperature is controlled as 1750 DEG C and the heat insulating time as 15min in the melt separation process.

Step 4: Slag washing refining

(1) Remove 95% of upper-layer aluminum oxide based melt slags, the remaining aluminum oxide based melt slags and the lower layer alloy melt were eccentrically and mechanically stirred at eccentric distance of 0.2 and at the stirring speed of 150 rpm, and controlling the temperature at 1750 DEG C;
(2) After the melt is uniformly mixed, continue to perform stirring, and spraying and blowing CaF$_2$-CaO-TiO$_2$-V$_2$O$_5$ based refining slags into the uniformly mixed melt from the bottom of a medium-frequency induction furnace by taking high-purity inert gas as carrier gas, wherein the mass ratio of the aluminothermic self-propagating reaction materials to CaF$_2$-CaO-TiO$_2$-V$_2$O$_5$ based refining slags is 1.0: 0.05.
The CaF$_2$-CaO-TiO$_2$-V$_2$O$_5$ based refining slags contain the following chemical ingredients in mass percentage of 5% of CaF$_2$, 50% of CaO, 0% of Na$_2$O, 30% of TiO$_2$, and 15% of V$_2$O$_5$, wherein the particle size of each component of CaO, CaF$_2$, Na$_2$O, TiO$_2$ and V$_2$O$_5$ powder in the CaF$_2$-CaO-TiO$_2$-V$_2$O$_5$ based refining slags is no larger than 0.2 mm, the CaF$_2$-CaO-TiO$_2$-V$_2$O$_5$ based refining slags are pretreated before being used, and roasting is performed at the roasting temperature of 180 DEG C for 20 h;
(3) After spraying and blowing the CaF$_2$-CaO-

$TiO_2$-$V_2O_5$ based refining slags, performing heat insulation at 1750 DEG C, and continue eccentric and mechanical stirring for 15 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.5% of Al, 4.30% of V, 0.2% of Si, 0.6% of Fe, 0.16% of O and the balance of Ti.

Embodiment 10:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including rutile containing 93% by mass of $TiO_2$, $V_2O_5$ powder, and performing separate roasting at 500 DEG C for 24 h; and roasting CaO at 250 DEG C for 12 h; drying $KClO_3$ at 150 DEG C for 18 h to obtain pretreated aluminothermic reduction reaction materials.

The pretreated aluminothermic reduction reaction materials were weighed in proportion, wherein the mass ratio of rutile to aluminum powder to $V_2O_5$ powder to CaO to $KClO_3$ is 1.0: 0.26: 0.045: 0.16: 0.28.

Among the aluminothermic reduction reaction materials, the particle size of the rutile is no larger than 3 mm, the particle size of the aluminum powder is no larger than 2 mm, the particle size of the $V_2O_5$ powder is no larger than 0.2mm, the particle size of CaO is no larger than 0.2 mm, and the particle size of $KClO_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, aluminum powder were added into the continuous material mixer at a gradient-reduced flow rate so that the aluminum proportioning amount of continuously added material mixture is gradually reduced from 1.28 times of the stoichiometric ratio to 0.78 times of the stoichiometric ratio, wherein the number of gradient changes of the aluminum proportioning amount conforms the following relational formula:

$$m = (b - c) \div a$$

In the formula, m is the number of gradient changes of the aluminum proportioning amount, b is the maximum aluminum proportioning amount, c is the minimum aluminum proportioning amount, a is the factor of gradient changes of the aluminum proportioning amount, where a is equal to 0.004, through calculation, m is 128, and the time interval of aluminum powder flow gradient changes is the total reaction time divided by m.

Obtaining that the total mass of the added aluminum powder is the total theoretical addition mass ($m_t$), the actual total addition mass ($m_a$) of the aluminum powder is obtained from the chemical reaction equation list as follows:

$$m_a = m_t \times 98\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1700 DEG C and the heat insulating time as 20 min in the melt separation process.

Step 4: Slag washing refining

(1) Remove 85% of upper-layer aluminum oxide based melt slags, the remaining aluminum oxide based melt slags and the lower layer alloy melt were eccentrically and mechanically stirred at eccentric distance of 0.4 and at the stirring speed of 100 rpm, and controlling the temperature at 1700 DEG C.

(2) After the melt is uniformly mixed, continue to perform stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.04.

The CaF$_2$-CaO-TiO$_2$-V$_2$O$_5$ based refining slags contain the following chemical ingredients in mass percentage of 5% of CaF$_2$, 49% of CaO, 1% of Na$_2$O, 40% of TiO$_2$, and 5% of V$_2$O$_5$, wherein the particle size of each component of CaO, CaF$_2$, Na$_2$O, TiO$_2$ and V$_2$O$_5$ powder in the CaF$_2$-CaO-TiO$_2$-V$_2$O$_5$ based refining slags is no larger than 0.2 mm, the CaF$_2$-CaO-TiO$_2$-V$_2$O$_5$ based refining slags are pretreated before being used, and roasting is performed at the roasting temperature of 150 DEG C for 10 h.

(3) After spraying and blowing the CaF$_2$-CaO-TiO$_2$-V$_2$O$_5$ based refining slags, performing heat insulation at 1700 DEG C, and continue eccentric and mechanical stirring for 10 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.8% of Al, 4.50% of V, 0.4% of Si, 0.7% of Fe, 0.22% of O and the balance of Ti.

Embodiment 11:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags containing 93% by mass of TiO$_2$, titanium dioxide containing 99.8% by mass of TiO$_2$, V$_2$O$_5$ powder, and performing separate roasting at 550 DEG C for 36 h; and roasting CaO at 250 DEG C for 12 h; drying KClO$_3$ at 150 DEG C for 24 h, to obtain pretreated aluminothermic reduction reaction materials, wherein the mixing mass ratio of high-titanium slags to titanium dioxide is 1 to 1.

The pretreated aluminothermic reduction reaction materials were weighed in proportion, wherein the mass ratio of high-titanium slags and titanium dioxide to aluminum powder to V$_2$O$_5$ powder to CaO to KClO$_3$ is 1.0: 0.26: 0.045: 0.16: 0.28.

Among the aluminothermic reduction reaction materials, the particle size of the high-titanium slags is no larger than 3 mm, the particle size of the titanium dioxide is no larger than 0.02 mm, the particle size of the aluminum powder is no larger than 2 mm, the particle size of the V$_2$O$_5$ powder is no larger than 0.2mm, the particle size of CaO is no larger than 0.2 mm, and the particle size of KClO$_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, aluminum powder were added into the continuous material mixer at a gradient-reduced flow rate so that the aluminum proportioning amount of continuously added material mixture is gradually reduced from 1.27 times of the stoichiometric ratio to 0.7 times of the stoichiometric ratio, wherein the number of gradient changes of the aluminum proportioning amount conforms the following relational formula:

$$m = (b - c) \div a$$

In the formula, m is the number of gradient changes of the aluminum proportioning amount, b is the maximum aluminum proportioning amount, c is the minimum aluminum proportioning amount, a is the factor of gradient changes of the aluminum proportioning amount, where a is equal to 0.002, and through calculation, m is 285.

Obtaining that the total mass of the added aluminum powder is the total theoretical addition mass ($m_t$), the actual total addition mass ($m_a$) of the aluminum powder is obtained from the chemical reaction equation list as follows:

$$m_a = m_t \times 97\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1750 DEG C and the heat insulating time as 15 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.4 and at the stirring speed of 150 rpm, and controlling the temperature at 1750 DEG C.

(2) After the melt is uniformly mixed, continue to perform stirring, and spraying and blowing $CaF_2$-CaO-$TiO_2$-$V_2O_5$ based refining slags into the uniformly-mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.06.

The $CaF_2$-CaO-$TiO_2$-$V_2O_5$ based refining slags contain the following chemical ingredients in mass percentage of 10% of $CaF_2$, 43% of CaO, 2% of $Na_2O$, 35% of $TiO_2$, and 10% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 200 DEG C for 12 h.

(3) After spraying and blowing the $CaF_2$-CaO-$TiO_2$-$V_2O_5$ based refining slags, performing heat insulation at 1750 DEG C, and continue eccentric and mechanical stirring for 10 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.6% of Al, 4.0% of V, 0.7% of Si, 0.9% of Fe, 0.13% of O and the balance of Ti.

Embodiment 12:

The method for preparing titanium alloys based on aluminothermic self-propagating gradient reduction and slag-washing refining specially comprises the following steps:

Step 1: Material pretreatment

The aluminothermic reduction reaction materials were separately pre-treated, including high-titanium slags containing 92% by mass of $TiO_2$, $V_2O_5$ powder, and performing separate roasting at 700 DEG C for 24 h; and roasting CaO at 250 DEG C for 12 h; drying $KClO_3$ at 250 DEG C for 24 h, to obtain pretreated aluminothermic reduction reaction materials.

The pretreated aluminothermic reduction reaction materials were weighed in proportion, wherein the mass ratio of high-titanium slags to aluminum powder to $V_2O_5$ powder to CaO to $KClO_3$ is 1.0: 0.26: 0.045: 0.16: 0.28.

Among the aluminothermic reduction reaction materials, the particle size of the high-titanium slags is no larger than 3 mm, the particle size of the aluminum powder is no larger than 2 mm, the particle size of the $V_2O_5$ powder is no larger than 0.2 mm, the particle size of CaO is no larger than 0.2 mm, and the particle size of $KClO_3$ is no larger than 2 mm.

Step 2: Aluminothermic self-propagating reaction

Mix the aluminothermic self-propagating reaction materials other than the aluminum powder to obtain a material mixture, and charging the material mixture into a continuous material mixer at a constant flow rate.

Besides, aluminum powder were added into the continuous material mixer at a gradient-reduced flow rate so that the aluminum proportioning amount of continuously added material mixture is gradually reduced from 1.23 times of the stoichiometric ratio to 0.72 times of the stoichiometric ratio, wherein the number of gradient changes of the aluminum proportioning amount conforms the following relational formula:

$$m = (b - c) \div a$$

In the formula, m is the number of gradient changes of the aluminum proportioning amount, b is the maximum aluminum proportioning amount, c is the minimum aluminum proportioning amount, a is the factor of gradient changes of the aluminum proportioning amount, where a is equal to 0.001, and through calculation, m is 450.

Obtaining that the total mass of the added aluminum powder is the total theoretical addition mass $(m_t)$, the actual total addition mass $(m_a)$ of the aluminum powder is obtained from the chemical reaction equation list as follows:

$$m_a = m_t \times 95\%$$

Mix the aluminothermic self-propagating reaction materials in the continuous material mixer to obtain a material mixture, and continuously adding the material mixture into the reaction furnace for the aluminothermic reduction reaction until all materials fully reacted to obtain high-temperature melt.

Step 3: Melt separation under electromagnetic field

Heat the high-temperature melt through electromagnetic induction, performing heat insulation and melt separation, and realizing slag-metal separation to obtain a layered melt with aluminum oxide based melt slags as an upper layer and alloy melt as a lower layer, wherein the temperature is controlled as 1750 DEG C and the heat insulating time as 15 min in the melt separation process.

Step 4: Slag washing refining

(1) Remove 90% of upper-layer aluminum oxide based melt slags, the remaining aluminum oxide based melt slags and the lower layer alloy melt were eccentrically and mechanically stirred at eccentric distance of 0.4 and at the stirring speed of 50 rpm, and controlling the temperature at 1750 DEG C.

(2) After the melt is uniformly mixed, continue to perform stirring, and spraying and blowing $CaF_2$-CaO-$TiO_2$-$V_2O_5$ based refining slags into the uniformly mixed melt from the bottom of a medium-frequency induction furnace by taking high-purity inert gas as carrier gas, wherein the mass ratio of the aluminothermic self-propagating reaction materials to $CaF_2$-CaO-$TiO_2$-$V_2O_5$ based refining slags is 1.0: 0.07.

The $CaF_2$-CaO-$TiO_2$-$V_2O_5$ based refining slags contain the following chemical ingredients in mass percentage of 5% of $CaF_2$, 49% of CaO, 1% of $Na_2O$, 30% of $TiO_2$, and 15% of $V_2O_5$, wherein the particle size of each component of CaO, $CaF_2$, $Na_2O$, $TiO_2$ and $V_2O_5$ powder in the $CaF_2$-CaO-$TiO_2$-$V_2O_5$ based refining slags is no larger than 0.2 mm, the $CaF_2$-CaO-$TiO_2$-$V_2O_5$ based refining slags are pretreated before being used, and roasting is performed at the roasting temperature of 200 DEG C for 24 h.

(3) After spraying and blowing the $CaF_2$-CaO-$TiO_2$-$V_2O_5$ based refining slags, performing heat insulation at 1750 DEG C, and continue eccentric and mechanical stirring for 10 min to obtain titanium alloy melt.

Step 5: Cooling

Cooling the titanium alloy melt to room temperature, and removing upper melting slags to obtain titanium alloys.

The prepared titanium alloys contain the following chemical ingredients in mass percentage of 5.5% of Al, 3.60% of V, 0.4% of Si, 0.9% of Fe, 0.10% of O and the balance of Ti.

**Claims**

1. A method for preparing titanium alloys based on aluminothermic self-propagating gradient reduction and slag-washing refining, **characterized by** specially comprising the following steps:

Step 1: Material pre-treatment
The aluminothermic reduction reaction materials were separately pretreated to obtain pretreated aluminothermic reduction reaction materials, wherein the aluminothermic reduction reaction materials are titanium-containing material, aluminum powder, $V_2O_5$ powder, CaO and $KClO_3$. The titanium-containing material is one of or a mixture of rutile, high-titanium slags or titanium dioxide and wherein high-titanium slags contain no less than 92% in mass percentage of $TiO_2$; weighing the pre-treated aluminothermic reduction reaction materials in proportion, wherein the mass ratio of titanium-containing material to aluminum powder to $V_2O_5$ powder to CaO to $KClO_3$ is 1.0: (0.60-0.24): (0.042-0.048): (0.12-0.26): (0.22-0.30). The aluminothermic reduction reaction material has the characters as follow: the particle size of rutile and high-titanium slags is no larger than 3 mm, while the particle size of titanium dioxide is no larger than 0.02 mm. Meanwhile, the particle size of aluminum powder, $V_2O_5$ powder, CaO and $KClO_3$ is no larger than 2 mm, 0.2 mm, 0.2 mm and 2 mm, respectively.

Step 2: Aluminothermic self-propagating reaction performing gradient aluminothermic reduction in one of the two following charging manners:

Charging manner I:
Mix the weighed aluminothermic self-propagating reaction materials other than aluminum powder to obtain a material mixture, and divide the material mixture into several parts; then weigh and take aluminum powder according to the adding sequence of each part of the material mixture into a reaction furnace. Moreover, gradually reducing the aluminium powder addition amount from 1.15-1.35 to 0.85-0.65 times of the stoichiometric ratio; the actual addition mass of the aluminum powder can be obtained from the equation list as follow:

$$m_a = m_t \times (95 - 100) \%$$

Where $m_a$ and $m_t$ represent the total actual and total theoretical addition mass of the aluminum powder, respectively. The first-batch added into the reaction furnace accounts for 10-30% of the mass of the total material mixture, and magnesium powder needs to be added as an ignition substance for the ignition of these first material mixture added into the reaction furnace to innduce a self-propagating reaction, so a first-batch high-temperature melt enough for initiating subsequent reactions is obtained. Finally, other parts of the material mixture was added into the reaction furnace until all materials fully reacted to obtain high-temperature melt.

Charging manner II:

Mix the aluminothermic self-propagating reaction materials other than aluminum powder to obtain a material mixture, and then charge the material mixture into a continuous material mixer at a constant flow rate. Besides, aluminum powder was added into the continuous material mixer at a gradient-reduced flow rate, so the aluminum proportioning amount of continuously added material mixture is gradually reduced from 1.15-1.35 to 0.85-0.65 times of the stoichiometric ratio, wherein the number of gradient changes of the aluminum proportioning amount conforms the following relational formula:

$$m = (b - c) \div a$$

In this formula, m is the number of gradient changes of the aluminum proportioning amount, b is the maximum aluminum proportioning amount, c is the minimum aluminum proportioning amount, a represents the factor of gradient changes of the aluminum proportioning amount, and a is a number between 0 and 0.04.

According to the chemical reaction equation, the actual total addition mass of aluminum powder ($m_a$) is obtained from the relationship with the total theoretical addition mass ($m_t$) through the following equation: $m_a = m_t \times (95 - 100)$ %.

A material mixture was obtained through uniformly mixing the aluminothermic self-propagating reaction materials in the continuous material mixer, and continuously adding the material mixture into the reaction furnace for aluminothermic reduction reaction until all materials fully reacted to obtain high-temperature melt.

Step 3: Melt separation under electromagnetic field

Heat the high-temperature melt through electromagnetic induction to perform heat insulation and melt separation, and realize slag-metal separation to obtain a layered melt with aluminum oxide based melt slags as an upper layer and alloy melt as a lower layer, wherein the temperature is controlled as 1700-1800 DEG C and the heat insulating time as 5-25 min in the melt separation process.

Step 4: Slag washing refining

(1) A large amount of slags account for 85-95% of total volume of upper-layer aluminum oxide based melt slags was removed, the remaining aluminum oxide based melt slags and the lower-layer alloy melt was eccentrically and mechanically stirred at a stirring speed of 50-150 rpm, and the temperature was controlled at the range of 1700-1800 DEG C;

(2) After the melt is uniformly mixed, continue to perform stirring. Meanwhile, $CaF_2$-CaO-$TiO_2$-$V_2O_5$ based refining slags were sprayed and blew into the uniformly-mixed melt with high-purity inert gas as carrier gas, wherein the mass ratio of the aluminothermic self-propagating reaction materials to $CaF_2$-CaO-$TiO_2$-$V_2O_5$ based refining slags is 1.0: (0.02-0.08).

The $CaF_2$-CaO-$TiO_2$-$V_2O_5$ based refining slags contain the following chemical ingredients in mass percentage of 5%-10% of $CaF_2$, 40%-60% of CaO, 0-2% of $Na_2O$, 30%-40% of $TiO_2$, 5%-15% of $V_2O_5$ and the balance of inevitable impurities, wherein the particle size of each component of CaO, $CaF_2$, $Na_2O$, $TiO_2$ and $V_2O_5$ powder in $CaF_2$-CaO-$TiO_2$-$V_2O_5$ based refining slags is no larger than 0.2 mm;

(3) After the process of spraying and blowing the $CaF_2$-CaO-$TiO_2$-$V_2O_5$ based refining slags was completed, perform heat insulation at 1700-1800 DEG C and continue eccentric and mechanical stirring for 10-30 min, so as to obtain titanium alloy melt.

Step 5: Cooling

Cooling the titanium alloy melt to room temperature, and then remove upper melting slags to obtain titanium alloys.

2. The method for preparing titanium alloys based on aluminothermic self-propagating gradient reduction and slag-washing refining according to claim 1, has a characterisation that the prepared titanium alloys contain the following chemical ingredients in mass percentage of 5.5%-6.5% of Al, 3.5%-4.5% of V, 0.2%-1.0% of Si, 0.2%-1.0% of Fe, O being no larger than 0.9% and the rest balance of Ti.

3. The method for preparing titanium alloys based on aluminothermic self-propagating gradient reduction and slag-washing refining according to claim 1, **char-**

**acterized in that** in the step 1, the separate pretreatment method of the aluminothermic reduction reaction materials is as follows:

(1) Roasting the titanium-containing material, $V_2O_5$ powder and CaO at a temperature being no less than 120 DEG C for 12-36 h, respectively;

(2) Drying $KClO_3$ at 150-300 DEG C for 12-48 h.

4. The method for preparing titanium alloys based on aluminothermic self-propagating gradient reduction and slag-washing refining according to claim 1, **characterized in that** in the step 2, the number of the several parts is n, wherein n is no less than 4.

5. The method for preparing titanium alloys based on aluminothermic self-propagating gradient reduction and slag-washing refining according to claim 1, **characterized in that** in the step 3, electromagnetic induction equipment is a medium-frequency induction furnace, and the frequency of the electromagnetic field is no less than 1000 Hz.

6. The method for preparing titanium alloys based on aluminothermic self-propagating gradient reduction and slag-washing refining according to claim 1, **characterized in that** in the step 4, the eccentricity ratio of the eccentric and mechanical stirring is 0.2-0.4.

7. The method for preparing titanium alloys based on aluminothermic self-propagating gradient reduction and slag-washing refining according to claim 1, **characterized in that** in the step 4, the spraying and blowing are preferably performed at the bottom of the medium-frequency induction furnace.

8. The method for preparing titanium alloys based on aluminothermic self-propagating gradient reduction and slag-washing refining according to claim 1, **characterized in that** in the step 4, high-purity inert gas is high-purity argon, and the purity is no less than 99.95%.

9. The method for preparing titanium alloys based on aluminothermic self-propagating gradient reduction and slag-washing refining according to claim 1, **characterized in that** in the step 4(2), the $CaF_2$-CaO-$TiO_2$-$V_2O_5$ based refining slags are pretreated before being used, wherein the roasting temperature is 150-450 DEG C, and the roasting time is 10-48 h.

**Patentansprüche**

1. Verfahren zum Zubereiten von Titanlegierungen basierend auf aluminothermischer selbst-übertragender Gradientenreduktion und Schlackenwäsche-Raffinieren, **gekennzeichnet durch** spezielles Umfassen der folgenden Schritte:

Schritt 1: Material-Vorbehandlung
Die aluminothermischen Reduktions-Reaktionsmaterialien wurden separat vorbehandelt, um vorbehandelte aluminothermische Reduktions-Reaktionsmaterialien zu erhalten, wobei die aluminothermischen Reduktionsmaterialien Titan enthaltendes Material, Aluminiumpulver, $V_2O_5$-Pulver, CaO und $KClO_3$ sind. Das Titan enthaltende Material ist eines oder eine Mischung von Rutil, Hoch-Titanschlacken oder Titandioxid und wobei die Hoch-Titanschlacken nicht weniger als 92 % $TiO_2$ enthalten; Wiegen der vorbehandelten aluminothermischen Reduktions-Reaktionsmaterialien, wobei das Masseverhältnis von Titan enthaltendem Material zu Aluminiumpulver zu $V_2O_5$ Pulver zu CaO zu $KClO_3$ beträgt 1.0: (0,60-0,24): (0,042-0,048): (0,12-0,26): (0,22-0,30). Das aluminothermische Reduktions-Reaktionsmaterial weist die folgenden Merkmale auf: Die Partikelgröße der Rutil- und Hoch-Titanschlacken ist nicht größer als 3 mm, während die Partikelgröße des Titandioxids nicht größer ist als 0,02 mm. Währenddessen ist die Partikelgröße des Aluminiumpulvers, $V_2O_5$ Pulvers, CaO und $KClO_3$ nicht größer als jeweils 2 mm, 0,2 mm, 0,2 mm und 2 mm.
Schritt 2: Aluminothermische selbst-übertragende Reaktion, die eine aluminothermische Gradientenreduktion auf eine der folgenden Ladeweisen durchführt:

Ladeweise I:
Mischen der gewogenen aluminothermischen selbst-übertragenden Reaktionsmaterialien mit Ausnahme des Aluminiumpulvers, um eine Materialmischung zu erhalten, und teilen der Materialmischung in mehrere Teile; dann wiegen und nehmen des Aluminiumpulvers gemäß der Zuschlagssequenz jedes Teils der Materialmischung in einen Reaktionsofen. Weiterhin allmähliches Reduzieren der Zuschlagsmenge des Aluminiumpulvers von dem 1,15 - 1,35- auf das 0,85 - 0,65-Fache des stöchiometrischen Verhältnisses; die effektive Zuschlagsmasse des Aluminiumpulvers kann von der Gleichungsliste wie folgt erhalten werden:

$$m_a = m_t \times (95 - 100)\ \%$$

Wobei $m_a$ und $m_t$ jeweils die gesamte effektive und gesamte theoretische Zuschlagsmasse des Aluminiumpulvers darstellt. Die erste Charge, die in den Reaktionsofen hinzugefügt wird, macht 10 - 30 % der Masse der gesamten Materialmischung aus und das Magnesiumpulver muss als eine Zündsubstanz zum Zünden der ersten Materialmischung in den Reaktionsofen hinzugefügt werden, um eine selbst-übertragende Reaktion derart zu induzieren, dass eine Hoch-Temperaturschmelze der ersten Charge erreicht wird, die zum Zünden der nachfolgenden Reaktionen ausreicht. Letztendlich wurden weitere Teile der Materialmischung in den Reaktionsofen hinzugefügt, bis alle Materialien vollständig reagiert haben, um eine Hoch-Temperaturschmelze zu erreichen.

Ladeweise II:

Mischen der aluminothermischen selbst-übertragenden Reaktionsmaterialien mit Ausnahme von Aluminiumpulver, um eine Materialmischung zu erhalten, und dann Laden der Materialmischung in einen kontinuierlichen Materialmischer bei einer konstanten Flussrate.

Weiterhin wurde in den kontinuierlichen Materialmischer bei einer gradienten-reduzierten Flussrate Aluminiumpulver derart hinzugefügt, dass die Aluminium zumessende Menge der kontinuierlich hinzugefügten Materialmischung allmählich von dem 1,15 - 1,35-Fachen bis zum 0,85 - 0,65-Fachen des stöchiometrischen Verhältnisses reduziert wurde, wobei die Anzahl der Gradientenänderungen der Aluminium zumessenden Menge der folgenden Beziehungsformel entspricht:

$$m = (b - c) \div a$$

In dieser Formel ist m die Anzahl der Gradientenänderungen der Aluminium zumessenden Menge, b ist die maximale Aluminium zumessende Menge, c ist die minimale Aluminium zumessende Menge, a stellt den Faktor von Gradientenänderungen der Aluminium zumessenden Menge dar und a ist eine Anzahl zwischen 0 und 0,04.

Gemäß der chemischen Reaktionsgleichung wird die effektive gesamte Zuschlagsmasse an Aluminiumpulver ($m_a$) von dem Verhältnis mit der gesamten theoretischen Zuschlagsmasse ($m_t$) **durch** die folgende Gleichung erhalten: $m_a = m_t \times (95 - 100)$ %.

**Durch** einheitliches Mischen der aluminothermischen selbst-übertragenden Reaktionsmaterialien in dem kontinuierlichen Materialmischer und kontinuierliches Hinzufügen der Materialmischung in den Reaktionsofen für eine aluminothermische Reduktionsreaktion wurde eine Materialmischung erhalten, bis alle Materialien vollständig reagiert haben, um eine Hoch-Temperaturschmelze zu erhalten.

Schritt 3: Schmelztrennung unter elektromagnetischem Feld

Erhitzen der Hoch-Temperaturschmelze **durch** elektromagnetische Induktion zum Durchführen einer Heißisolation und Schmelztrennung und Realisieren einer Schlacken-Metalltrennung zum Erhalten einer geschichteten Schmelze mit auf Aluminiumoxid basierten Schlacken als eine obere Schicht und Legierungsmaterial als eine untere Schicht, wobei die Temperatur auf 1700 - 1800 GRAD C und die Hitze-Isolationszeit auf 5 - 25 Min. im Schmelz-Trennungsprozess kontrolliert werden.

Schritt 4: Schlackenwäsche-Raffinieren

(1) Eine große Menge an Schlacken, die 85 - 95 % des Gesamtvolumens der oberen Schicht der auf Aluminiumoxid basierenden Schmelzschlacken ausmachen, wurde entfernt, die verbleibenden auf Aluminiumoxid basierenden Schmelzschlacken und die untere Schicht der Legierungsschmelze wurden exzentrisch und mechanisch bei einer Rührgeschwindigkeit von 50 - 150 U/Min. gerührt und die Temperatur wurde in dem Bereich von 1700 - 1800 GRAD C kontrolliert;

(2) Nachdem die Schmelze einheitlich gemischt ist, das Rühren weiterführen. In der Zwischenzeit werden $CaF_2$-CaO-$TiO_2$-$V_2O_5$ - basierte Raffinerieschlacken in die einheitlich gemischte Schmelze mit einem hochreinen inerten Gas als Gasträger gesprüht und geblasen, wobei das Masseverhältnis der aluminothermischen, selbst-übertragenden Reaktionsmaterialien zu $CaF_2$-CaO-$TiO_2$-$V_2O_5$ - basierten Raffinerieschlacken 1.0: (0,02-0,08) beträgt.

Die $CaF_2$-CaO-$TiO_2$-$V_2O_5$-basierten Raffinerieschlacken enthalten die folgenden chemischen Zutaten im Masseprozentsatz von 5 %-10 % $CaF_2$, 40 %-60 % CaO, 0-2 % $Na_2O$, 30 % - 40 % $TiO_2$, 5 % - 15 % $V_2O_5$ und den Rest an unvermeidlichen Verunreinigungen, wobei die Partikelgröße jedes Bestandteils von CaO, $CaF_2$, $Na_2O$, $TiO_2$ und $V_2O_5$ Pulver in $CaF_2$-CaO-$TiO_2$-$V_2O_5$ -basierten Raffinerieschlacken nicht größer ist als 0,2 mm;

(3) Nachdem der Prozess des Sprühens und Blasens der $CaF_2$-CaO-$TiO_2$-$V_2O_5$ -basierten Raffinerieschlacken abgeschlossen war, Durchführen der Heißisolation bei 1700 - 1800 GRAD C und weiterhin exzentrisches und mechanisches Rühren über 10 - 30 Min., derart, dass eine Titanlegierungsschmelze erhalten wird.

Schritt 5: Kühlen
Kühlen der Titanlegierungsschmelze auf Raumtemperatur und dann entfernen der oberen Schmelzschlacken zum Erhalten von Titanlegierungen.

2. Das Verfahren zum Zubereiten von Titanlegierungen basierend auf einer aluminothermischen selbstübertragenden Gradientenreaktion und Schlackenwäsche-Raffinieren gemäß Anspruch 1 weist eine Charakterisierung auf, nach der die zubereiteten Titanlegierungen die folgenden chemischen Zutaten in Masseprozentsätzen von 5,5 % - 6,5 % Al, 3,5 % - 4,5 % V, 0,2 % - 1,0 % Si, 0,2 % - 1,0 % Fe, enthalten, wobei O größer ist als 0,9 % und der Rest Ti ist.

3. Verfahren zum Zubereiten von Titanlegierungen basierend auf einer aluminothermischen selbst-übertragenden Gradientenreduktion und Schlackenwäsche-Raffinieren gemäß Anspruch 1, **dadurch gekennzeichnet, dass** in Schritt 1 das separate Vorbehandlungsverfahren der aluminothermischen Reduktions-Raffineriematerialien wie folgt ist:

(1) Glühen des Titan enthaltenden Materials, $V_2O_5$ Pulvers und CaOs bei einer Temperatur von nicht weniger als 120 GRAD C über jeweils 12 - 36 Stunden;
(2) Trocknen von $KClO_3$ bei 150-300 GRAD C über 12 - 48 Std..

4. Verfahren zum Zubereiten von Titanlegierungen basierend auf einer aluminothermischen selbst-übertragenden Gradientenreduktion und Schlackenwäsche-Raffinieren gemäß Anspruch 1, **dadurch gekennzeichnet, dass** in Schritt 2 die Anzahl der mehreren Teile n ist, wobei n nicht weniger als 4 ist.

5. Verfahren zum Zubereiten von Titanlegierungen basierend auf einer aluminothermischen selbst-übertragenden Gradientenreduktion und Schlackenwäsche-Raffinieren gemäß Anspruch 1, **dadurch gekennzeichnet, dass** in Schritt 3 die elektromagnetische Induktionsausrüstung ein Mittelfrequenz-Induktionsofen ist und die Frequenz des elektromagnetischen Feldes nicht weniger als 1000 Hz beträgt.

6. Verfahren zum Zubereiten von Titanlegierungen basierend auf einer aluminothermischen selbst-übertragenden Gradientenreduktion und Schlackenwäsche-Raffinerie gemäß Anspruch 1, **dadurch gekennzeichnet, dass** in Schritt 4 das Exzentritätsverhältnis und das mechanische Rühren 0,2 - 0,4 betragen.

7. Verfahren zum Zubereiten von Titanlegierungen basierend auf einer aluminothermischen selbst-übertragenden Gradientenreduktion und Schlackenwäsche-Raffinerie gemäß Anspruch 1, **dadurch gekennzeichnet, dass** in Schritt 4 das Sprühen und Blasen bevorzugt am Boden des Mittelfrequenz-Induktionsofens erfolgen.

8. Verfahren zum Zubereiten von Titanlegierungen basierend auf einer aluminothermischen selbst-übertragenden Gradientenreduktion und Schlackenwäsche-Raffinerie gemäß Anspruch 1, **dadurch gekennzeichnet, dass** in Schritt 4 das hochreine inerte Gas ein hochreines Argon ist und die Reinheit nicht weniger als 99,95% beträgt.

9. Verfahren zum Zubereiten von Titanlegierungen basierend auf einer aluminothermischen selbst-übertragenden Gradientenreaktion und Schlackenwäsche-Raffiniere gemäß Anspruch 1, **dadurch gekennzeichnet, dass** in Schritt 4(2) die $CaF_2$-CaO-$TiO_2$-$V_2O_5$ - basierten Raffinerieschlacken vor dem Verwenden vorbehandelt werden, wobei die Glühtemperatur 150 - 450 GRAD C und die Glühzeit 10 - 48 Std. betragen.

**Revendications**

1. Méthode de préparation d'alliages de Titane basée sur une réduction aluminothermique auto-alimentée progressive et un raffinage par enlèvement des scories, **caractérisée par** les étapes suivantes :

Étape 1: Pré-traitement des matériaux
Les matériaux de réaction de la réduction aluminothermique sont prétraités séparément pour obtenir des matériaux de réaction de réduction aluminothermique prétraités, pour lesquels les matériaux de réaction de réduction aluminothermique sont un matériau contenant du Titane, de la poudre d'Aluminium, de la poudre $V_2O_5$, du CaO et du $KClO_3$. Le matériau contenant du Titane est un mélange de rutile, de scories à haute teneur en Titane ou de dioxyde de Titane et pour lequel les scories à haute teneur en Titane contiennent au moins 92% de $TiO_2$; les matériaux de réaction de réduction prétraités sont pondérés suivant leur masse, pour lesquels le rapport de masse entre le matériau contenant du Titane à la poudre d'aluminium et à la poudre $V_2O_5$ et au CaO et à $KClO_3$ est de 1,0 : (0,60-0,24) : (0,042-0,048) : (0,12-0,26) : (0,22-0,30). Les matériaux de réaction de réduction ont les caractéristiques suivantes : la taille des particules de rutile et des scories à haute teneur en Titane n'est pas plus grande que 3 mm, tandis que la taille des particules de dioxyde de Titane n'est pas plus grande que 0,02 mm. Mais également, que la taille des particules de poudre d'Aluminium, de poudre $V_2O_5$, de CaO et $KClO_3$ n'est pas plus grande que 2 mm, 0,2 mm, 0,2 mm et 2 mm, respectivement.

Étape 2 Réaction aluminothermique auto-alimentée effectuant une réduction aluminothermique progressive suivant l'une des deux manières suivantes de chargement :

Manière de chargement I :
Mélanger les matériaux de réaction aluminothermique auto-alimentée pondérés, autre que la poudre d'Aluminium, pour obtenir une mixture des matériaux, et diviser le mélange de matériaux en plusieurs parties; ensuite peser et prendre de la poudre d'Aluminium en fonction de la séquence d'ajout de chaque partie du mélange de matériaux dans un four à réaction. En outre, réduire progressivement la quantité d'ajout de poudre d'aluminium de 1,15-1,35 à 0,85-0,65 fois le rapport stœchiométriqué; la masse réelle de poudre d'aluminium à ajouter peut être obtenue à partir de l'équation suivante :

$$m_a = m_t \times (95 - 100) \%$$

Où $m_a$ et $m_t$ représentent la masse totale réelle et théorique de la poudre d'aluminium, respectivement. Le premier lot ajouté dans le four de réaction représente 10-30% de la masse totale du mélange de matériaux, et la poudre de magnésium doit être ajoutée en tant que substance de démarrage pour le démarrage de ce premier mélange de matériau ajouté dans le four de réaction afin d'induire une réaction auto-alimentée, de sorte qu'un premier lot de haute température fond suffisamment pour initier les réactions ultérieures. Enfin, les autres parties du mélange de matériaux sont ajoutées dans le four de réaction jusqu'à ce que tous les matériaux réagissent entièrement pour obtenir un mélange en fusion de haute température.

Manière de chargement II :

Mélanger les matériaux de réaction aluminothermique auto-alimentée pondérés, autre que la poudre d'aluminium, pour obtenir une mixture de matériaux, puis charger le mélange de matériaux dans un mélangeur de matériaux continus avec un débit constant.

En parallèle, la poudre d'Aluminium est ajoutée dans le mélangeur de matériaux continus à un débit réduit, de sorte que la quantité d'Aluminium du mélange de matériaux continuellement ajouté est progressivement réduite de 1,15-1,35 à 0,85-0,65 fois le rapport stœchiométrique en Aluminium, pour lequel le nombre de changements de gradient de la proportion de quantité d'aluminium respecte la formule suivante :

$$m = (b - c) \div a$$

Dans cette formule, m est le nombre de changements de gradient de la quantité d'Aluminium, b est la proportion de quantité maximale d'Aluminium, c est la proportion de quantité minimale d'Aluminium, a représente le facteur de changements de gradient de la proportion de quantité d'Aluminium, et a est un nombre entre 0 et 0,04.

Suivant l'équation de réaction chimique, la masse totale réelle d'addition de poudre d'aluminium ($m_a$) est obtenue à partir de la relation impliquant la masse d'addition théorique totale ($m_t$) suivante : $m_a = m_t \times (95 - 100) \%$.

Un mixture des matériaux est obtenue par le mélange uniforme des matériaux de réaction aluminothermique auto-alimentée dans le mélangeur continu de matériaux, et en ajoutant continuellement le mélange de matériaux dans le four de réaction de réduction aluminothermique jusqu'à ce que tous les matériaux réagissent entièrement afin d'obtenir un mélange en fusion de haute température.

Étape 3 : Séparation du mélange en fusion avec un champ électromagnétique Chauffer le mélange en fusion de haute température via une induction électromagnétique afin d'effectuer l'isolation thermique et la séparation du mélange en fusion, et réaliser la séparation des scories afin d'obtenir un mélange en fusion en couches avec des scories de fonte à base d'oxyde d'Aluminium dans la couche supérieure et le mélange en fusion d'alliage dans la couche inférieure, pour laquelle la température est maintenue entre 1700-1800 degré Celsius et le temps d'isolation thermique de 5-25 min dans le processus de séparation du mélange en fusion.

Étape 4 : Raffinage par enlèvement des scories

(1) Une grande quantité de scories représentant 85-95% du volume total des scories de fonte à base d'oxyde d'aluminium de la couche supérieure est enlevée, les scories de fonte à base d'oxyde d'aluminium restantes et le mélange en fusion d'alliage de la couche inférieure sont excentriquement et mécaniquement agités à une vitesse d'agitation de 50-150 tr/min, et la température est maintenue entre 1700-1800 degré Celsius ;

(2) Après que le mélange en fusion soit uniformément mélangé, continuer à agiter. Pendant ce temps, les scories à base de $CaF_2$-CaO-$TiO_2$-$V_2O_5$ sont pulvérisées et atomisées dans la fonte uniformément mélangée à l'aide d'un gaz inerte de haute pureté servant de gaz transporteur, pour lequel le rapport de masse des matériaux de réaction aluminothermique auto-alimentée aux scories à base de $CaF_2$-CaO-$TiO_2$-$V_2O_5$ est de 1,0: (0,02-0,08).

Les scories à base de $CaF_2$-Cao-$TiO_2$-$V_2O_5$ contiennent les ingrédients chimiques suivants en pourcentage de masse de 5%-10% de $CaF_2$, 40%-60% de CaO, 0-2% de $Na_2O$, 30%-40% de $TiO_2$, 5%-15% de $V_2O_5$ et des impuretés inévitables, pour lesquelles la taille des particules de chaque composant de CaO, $CaF_2$, $Na_2O$, $TiO_2$ et la poudre de $V_2O_5$ des scories à base de $CaF_2$-CaO-$TiO_2$-$V_2O_5$ n'est pas plus grande que 0,2 mm;

(3) Après que le processus de pulvérisation et d'atomisation des scories de raffinage à base de $CaF_2$-CaO-$TiO_2$-$V_2O_5$ soit achevé, effectuer l'isolation thermique à 1700-1800 degré Celsius et continuer l'agitation excentrique et mécanique durant 10-30 min, afin d'obtenir l'alliage de Titane en fusion.

Étape 5: refroidissement
Refroidir l'alliage de Titane à température ambiante, puis enlever les scories supérieures de fusion afin d'obtenir des alliages de titane.

2. Méthode de préparation d'alliages de Titane basée sur une réduction aluminothermique auto-alimentée progressive et un raffinage par enlèvement des scories selon la revendication 1, **caractérisée par le fait que** les alliages de titane préparés contiennent les ingrédients chimiques suivants avec un pourcentage de masse de 5,5%-6,5% d'Al, 3,5%-4,5% de V, 0,2%-1,0% de Si, 0,2%-1,0% de Fe, O n'étant pas plus grand que 0,9% et le reste de Ti.

3. Méthode de préparation d'alliages de Titane basée sur une réduction aluminothermique auto-alimentée progressive et un raffinage par enlèvement des scories selon la revendication 1, **caractérisée par le fait que** dans l'étape 1, la méthode de prétraitement des matériaux de réaction de réduction aluminothermique est la suivante :

(1) Torréfier le matériau contenant du Titane, la poudre de $V_2O_5$ et le CaO à une température minimale de 120 degré Celsius pendant 12-36 h, respectivement ;
(2) Sécher le $KClO_3$ à 150-300 degré Celsius pendant 12-48 h.

4. Méthode de préparation d'alliages de Titane basée sur une réduction aluminothermique auto-alimentée progressive et un raffinage par enlèvement des scories selon la revendication 1, **caractérisée par le fait que** dans l'étape 2, le nombre de parties est n, pour laquelle n n'est pas inférieur à 4.

5. Méthode de préparation d'alliages de Titane basée sur une réduction aluminothermique auto-alimentée progressive et un raffinage par enlèvement des scories selon la revendication 1, **caractérisée par le fait que**, dans l'étape 3, l'équipement d'induction électromagnétique est un four à induction à fréquence moyenne, et la fréquence du champ électromagnétique n'est pas inférieure à 1000 Hz.

6. Méthode de préparation d'alliages de Titane basée sur une réduction aluminothermique auto-alimentée progressive et un raffinage par enlèvement des scories selon la revendication 1, **caractérisée en ce que**, dans l'étape 4, le rapport d'excentricité de l'agitation excentrique et mécanique est de 0,2-0,4.

7. Méthode de préparation d'alliages de Titane basée sur une réduction aluminothermique auto-alimentée progressive et un raffinage par enlèvement des scories selon la revendication 1, **caractérisée en ce que**, dans l'étape 4, la pulvérisation et l'atomisation sont de préférence effectués au fond du four à induction à fréquence moyenne.

8. Méthode de préparation d'alliages de Titane basée sur une réduction aluminothermique auto-alimentée progressive et un raffinage par enlèvement des scories selon la revendication 1, **caractérisée en ce que**, dans l'étape 4, le gaz inerte de haute pureté est de l'argon de haute pureté, et la pureté n'est pas inférieure à 99,95 %.

9.  Méthode de préparation d'alliages de Titane basée sur une réduction aluminothermique auto-alimentée progressive et un raffinage par enlèvement des scories selon la revendication 1, **caractérisée par le fait que** l'étape 4(2), les scories de raffinages à base de $CaF_2$-$CaO$-$TiO_2$-$V_2O_5$ sont prétraités avant d'être utilisés, pour laquelle la température de torréfaction est de 150-450 degré Celsius, et le temps de torréfaction est de 10-48 h.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104131178 B